# EUROPEAN PATENT APPLICATION

(11) **EP 3 428 205 A1**
(43) Date of publication of application: **16.01.2019**
(21) Application number: 17180662.3
(22) Date of filing: 11.07.2017
(51) Int. Cl.: C08F 220/18, C08F 2/08, C08F 265/06, C08F 8/14

(54) **NON-AQUEOUS DISPERSANT COMPOSITES AND THEIR USE AS THICKENER**

(71) Applicant: Akzo Nobel Chemicals International B.V., 6824 BM Arnhem (NL)
(72) Inventor: WILLIAMS, Neal St. John, Warfield, Berkshire RG42 3JN (GB); THOMPSON, Donovan Lamar, Franklin Park, NJ New Jersey 08823 (US); HE, Qiwei, Belle Mead, NJ New Jersey 08502 (US); LEBLANC, Jean-Pierre, Hillsborough, NJ New Jersey 08844 (US)
(74) Representative: Akzo Nobel Chemicals IP Group

(57) **Abstract**

The present invention is directed to NADCs with exceptional thickening power in various apolar media. The NADCs consist of a core which is swellable and not soluble in said media, and a covalently-bonded outer layer of a dispersing or stabilizing polymer that surrounds the core. Due to the good compatibility of the core and the dispersing-polymer-part of the NADC with non-aqueous media, the stability of the resulting dispersion is guaranteed, whereby the compatibility of the dispersing polymer and the solid core was found to become less relevant due to the covalent bonding. This allows the production of the claimed NADCs that are fully compatible with apolar (nonaqueous) media and have exceptional thickening, combined with a good stability. In an embodiment the dispersing-polymer-part of the NADCs contain both acidic and basic moieties. The invention also relates to NADCs where the dispersing polymer further contains one or more moieties derived from bicyclic (meth)acrylate esters.

The invention also relates to a process to make such NADCs. Further, the invention relates to the use of the NADCs as thickeners.

## Description

### Field of the Invention

The present invention relates to new non-aqueous dispersant composites (NADCs).

### Background of Invention

Non-aqueous dispersants (NADs) are typically polymers, also called stabilizing polymers, which are suitable for dispersing solids in a non-aqueous medium. Typically such conventional NADs are block type polymers. However, the compatibility of the NAD, with both the solids and the medium, is often insufficient, leading to a poor stability of the dispersion. Therefore there was a need for other types of NADs. The solution found was to bind the to-be-dispersed particles to the stabilizing polymer. Such stabilized particles are hereinafter referred to as non-aqueous dispersant composites (NADCs). Such NADCs are, for instance, disclosed in US 4,673,703. Herein it is said that the stability of the NADC in hydrocarbon liquids is based on a steric mechanism. Similarly, GB 1,594,123 and GB 1,599,045, discloses coating compositions in which the film-forming material comprises polymer particles of colloidal dimensions which are stably dispersed by a steric mechanism in a non-aqueous liquid continuous phase in which the polymer particles remain dispersed as discrete entities.
However, it was found that the performance of the products of the prior art in many non-aqueous media is insufficient. Accordingly, there is a need for other types of NADCs.

### Summary of the Invention

It was found that NADCs with a better thickening effect resulted in more stable compositions. Accordingly, there is a need for NADCs with a better thickening power. The present invention relates to very specific NADCs, which were found to have a better thickening power in various apolar media. The NADCs consist of a core which is swellable, and not soluble, in said media, and a covalently-bonded outer layer of a specific dispersing or stabilizing polymer that surrounds the core. Due to the compatibility of the dispersing-polymer-part of the NADC with non-aqueous media in combination with the fact that the core polymer also has an affinity for non-aqueous media, without that said core polymer dissolves, the stability of the resulting dispersion is guaranteed. This allows the production of the claimed NADCs that are fully compatible with non-aqueous media. Surprisingly it was found that a core-polymer which is swellable in a-polar media gives a much better thickening then cores which do not swell in apolar media.

It was further found that if the dispersing-polymer-part comprises both acidic and basic moieties, then the NADCs showed an exceptional thickening effect when dispersed in non-aqueous media. Accordingly, in one embodiment, the invention relates to NADCs comprising a dispersing polymer that is covalently bonded to a swellable core and wherein the dispersing polymer contains both acidic and basic moieties. In an embodiment, the invention also relates to NADCs where the dispersion polymer contains one or more moieties derived from oil-soluble monomers, including monomers like bicyclic (meth)acrylate esters. Also such NADCs were found to be compatible with a variety of apolar media whereby the core polymer together with the dispersing polymer provided the desired thickening effect. In an embodiment, the invention relates to NADCs where the dispersion polymer contains one or more moieties derived from bicyclic (meth)acrylate esters.
The NADCs of the invention were found to be both exceptionally compatible with a variety of apolar media whereby the combination of swellable core polymer with a dispersing polymer, preferably with acid and base moieties and/or bicyclic (meth)acrylate esters, were able to provide the desired thickening effect. In an embodiment the invention relates to a process to make such NADCs.
In another embodiment the invention relates to the use of the NADCs to thicken a non-polar medium in which they are dispersed. In an embodiment the non-polar medium is not a grease.

### Detailed Description of the Invention

The present invention is directed, in one embodiment, to very specific NADCs, which were found to be useful as a thickener in various apolar, also called non-polar, or non-aqueous, media. Such apolar media is herein defined to have a dielectric coefficient of less than 7 at 20°C. Suitably it is a medium with a dielectric coefficient at 20°C of less than 6.5, 6, 5.5, 5, 4.5, 4, 3.5, or 3. The dielectric constant is measured in accordance with ASTM D150.
The NADCs consist of a core which is swellable and not soluble in said media, and a dispersing polymer that is covalently-bonded to said core. Swelling in apolar media is herein used for polymers which, when mixed with base oil 500n (Daesan) ex Shell (5g/50ml), and filtering the mixture with a 150ml, 60mm diameter, glass-frit filter type P4 (with 10-16 micron pores) at 25 °C, whereby the oil is removed by applying vacuum under the glass frit, followed by air being sucked through the polymer and the glass frit for 10 minutes, followed by a single rinse and stir with 50 ml ethanol and again pulling air through the polymer and the glass frit for 5 minutes, contain from 1 to 99 percent by weight (%w/w) of the base oil, based on the weight of the dry polymer. In an embodiment, the polymer, after removal of the unbound oil, contains more than 2, 3, 4, or 5 %w/w of the oil, based on the weight of the dry polymer. In an embodiment, the polymer, after removal of the unbound oil, contains less than 75, 55, 40, 30, 25, 20, 15, or 10%w/w of the oil, based on the weight of the dry polymer. It is noted that the term "not soluble" herein means that the core material in its pure form, has a solubility in heptane of less than 5 g/l at 20 °C. In an embodiment the non-soluble core has a solubility in heptane of at most 2, 1, or 0.5 g/l at 20 °C. Full compatibility with a medium, also referred to as compatible, of a polymer means that the polymer has a solubility in said medium of at least 5 g/l at 20 °C. For the dispersing polymer to be compatible with apolar media, the polymer, when not bound to a core, has said solubility in heptane. In an embodiment the dispersing polymer, when not bound to a core, has a solubility in heptane of 7, 10, or 15 g/l at 20 °C. In an embodiment the solubility of the dispersing polymer increases with increasing temperatures.

In the NADCs, the dispersing polymer is located on the outside of the core, not necessarily in a shell-like structure, but the dispersing polymer will be located in a shell-like area surrounding the core. Especially when present in an apolar medium, they are believed to be able to form "fringes" or "tails" that stick out from the core into the medium, thus dispersing the core in said medium. Due to the compatibility of the dispersing-polymer-part of the NADC with non-aqueous media, as well as the fact that the dispersing polymer was covalently bonded to the swellable, but non-soluble, core, the claimed NADCs that are compatible with apolar media are obtained. The NADCs when dispersed, showed excellent storage stability in apolar media combined with an exceptional thickening of said media.

For best thickening power of the NADCs in apolar media, the dispersing-polymer-part of the NADC must be derived from a mixture of monomers such that it contains both lyophilic, preferably oleophilic, monomers having an affinity for the apolar medium to be thickened, and/or monomers with a combination of acidic and basic moieties. Accordingly, in one embodiment, the invention relates to NADCs comprising one or more dispersing polymers that are covalently bonded to the core and wherein the dispersing polymer contains lyophilic, preferably oleophilic, moieties, and/or acidic and basic moieties.

In another embodiment the invention relates to the use of the NADCs to thicken an apolar medium in which they are dispersed. In an embodiment the apolar medium is not a grease.

### Dispersing polymer

In an embodiment the dispersing polymer of the NADC is obtainable from a polymerization wherein a mixture of two or more monomers is present, as desired. If used, the acid and basic groups can be introduced thru two different types of monomer, each bearing either the acid or basic functionality or one monomer can bear both the acid and base functionality, as in betaines with a polymerizable group, or the monomers can be grafted onto a polymer. Alternatively, a prepolymer is made using one or more monomers with either acid or basic functionality, after which the resulting prepolymer is reacted with a reactant bearing groups capable of reacting with the prepolymer as well as groups of the other type of functionality, whereby part or all of the acid or base groups of the prepolymer are still present in the final polymer.

The ratio in which the acid and basic functions are present in the dispersing polymer can be varied within a wide range. Suitably the ratio of acid and basic groups ranges from 1:99 to 99:1 mole%. In an embodiment the molar ratio between acid and base groups of the polymer is more than 5:95, more than 10:90, more than 25:75, more than 40:60, or more than 50:50. In an embodiment the molar ratio between acid and base groups of the polymer is less than 95:5, less than 90:10, less than 80:20, less than 75:25, or less than 70:30. In an embodiment the acid and base groups are present in the polymer in a molar ratio between 50:50 and 70:30.
In an embodiment each dispersing polymer molecule comprises sufficient acid functions to generate the desired thickening effect. The number of acid functions on the polymer is suitably 1, 2, 3, 4, 5, 10, 20, 50 or more per polymer molecule. The number of acid functions on each polymer molecule can be 1000, 100, 50, 20, 10, or less.
In an embodiment each dispersing polymer molecule comprises sufficient base functions to generate the desired thickening effect. The number of base functions on the polymer is suitably 1, 2, 3, 4, 5, 10, 20, 50 or more per polymer molecule. The number of base functions on the polymer can be 1000, 100, 50, 20, 10, or less. If the base function is an amine, then the number is suitably much higher than the amount of acid groups in the polymer. The number of base functions on the polymer can then be 30000, 10000, 5000, 2000, 1000, or less. Such polymers are characterized by a positive base number which is used in its conventional meaning and is a measure for the amount of free amine functions that can be reacted with acidic moieties. Suitably an excess of amine base function, compared to the acid function, is present in the dispersing polymer. Suitably the excess is such that when the amine function has reacted with the acidic function of the dispersing polymer, the excess results in a total base number of 6-90 mg/kg dispersing polymer. The base number is suitably determined in accordance with ASTM D 4739-02, optionally using a solution in heptane. When NADCs with a base number is used, the media in which it is used will have an anti-corrosive effect and the media will remain a better viscosity when attacked by acidic compounds.

In an embodiment the one or more acid functions of the polymer are obtained by polymerization of one or more monomers selected from unsaturated carboxylic acids, unsaturated sulfonic acids, unsaturated phosphoric acids, and unsaturated boric acids. Unsaturated carboxylic acids include acrylic acid, methacrylic acid, crotonic acid, tiglic acid, citronellic acid, ricin acid, oleic acid, palmitoleic acid, erucic acid, brassidic acid, vinylbenzoic acid, such as 4-vinylbenzoic acid, sorbic acid of formula CH₃CH=CHCH=CHCOOH, linolenic acid of formula CH₃(CH₂CH=CH)₃(CH₂)₇CO₂H, dihydrogeranic acid of formula (CH₃)₂C=CHCH=CHC(CH₃)₂=COOH, maleic dicarboxylic acid, itaconic diacid, citraconic diacid, and mesaconic diacid, aconitic triacid HOOC-CH₂C(COOH)=CHCOOH, and any isomer of any of these compounds, salts thereof, and mixtures thereof.
Unsaturated sulfonic acid monomers include 2-acrylamido-2-methylpropane sulfonic acid, vinyl sulfonic acid, 2-sulfoethyl acrylate, 2-sulfoethyl methacrylate, 3-sulfopropyl acrylate, 3-sulfopropyl methacrylate, sodium styrene (4-)sulfonate, and 2-propene-1-sulfonic acid, and salts thereof, and combinations thereof. Unsaturated phosphoric acids include phosphoric acid 2-hydroxyethyl (m)ethacrylate ester, and phosphoric acid esters of alkoxylated (m)ethacrylates.

In an embodiment the one or more base functions of the polymer are derived from monomers with primary, secondary, or tertiary amine groups. In an embodiment they are primary amine monomers selected from vinyl amine, lysine, allylamine, and 2-aminoethyl methacrylate. In an embodiment they are secundary amine monomers selected from N-methylvinylamine, tert-butylaminoethyl methacrylate (TBAEMA), and N-(3-aminopropyl)methacrylamide. In an embodiment they are tertiary amine monomers selected from dimethylaminopropyl methacrylamide (DMAPMA), 2-(dimethylamino)ethyl methacrylate (DMAEMA), dimethylaminopropyl methacrylate, 2-vinyl-1-methylpyridine, 2-dimethylaminoethyl(m)ethacrylate, and N-vinylpyrrolidone.
If desired, the basic amine monomers are supplied in the salt form. Usually a salt with hydrochloric acid. However, if halogens are less preferred the salt can be a (metho)sulfate or phosphate.

In an embodiment, at least one monomer selected from bicyclic (meth)acrylate esters being a (meth)acryloyl radical bonded to a six-membered carbon atom bridged ring is used when making the dispersing polymer. Such monomers are lyophilic and oleophilic. Said group of monomers include products like decahydronaphtyl (meth)acrylates, and adamantyl (meth)acrylates, but preferred are products according to formula (I) 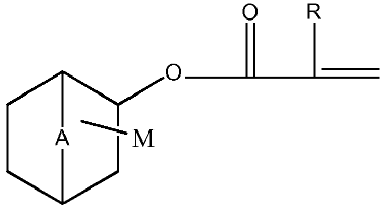 wherein
R is H or-CH₃,
A is -CH2-, -CH(CH3)- or -C(CH3)2-, and
one or more M is covalently bonded to any carbon of the bicyclic rings, preferably to a carbon atom of the six-membered ring, and each M is independently selected from the group consisting of hydrogen, halogen, methyl and methylamino group or a plurality thereof. Non-limiting examples of the bicyclic (meth)acrylate esters include isobornyl (meth)acrylate, bornyl (meth)acrylate, fenchyl (meth)acrylate, isofenchyl (meth)acrylate, norbornyl methacrylate, cis, (endo) 3-methylamino-2-bornyl (meth)acrylate, 1,4,5,6,7,7-hexachlorobicyclo [2.2.1]-hept-5-ene-2-ol methacrylate (HCBOMA) and 1,4,5,6,7,7-hexachlorobicyclo [2.2.1]-hept-5-ene-2 methanol methacrylate (HCBMA), and mixtures of such bicyclic methacrylates. It is noted that throughout this document the term (meth)acrylates is used to cover both the corresponding acrylate and methacrylate. The chlorinated compounds are less preferred since they can liberate corrosive HCl, depending on the circumstances. A preferred bicyclic methacrylate ester is isobornyl methacrylate. The bicyclic (meth)acrylate esters are known per se and may be prepared in known fashion or may be obtained from commercial sources. It was found that the use of these monomers when preparing the dispersing polymer of the invention results in a NADC with an enhanced thickening effect in a very wide range of apolar media.

In another embodiment one or more lyophilic monomers selected from oil-soluble monomers other than bicyclic (meth)acrylate esters is used. Suitable oil-soluble monomers include C10-18-alkyl (meth)acrylates or mixtures thereof, such as lauryl methacrylate, monomers having one or more 12-hydroxystearic acid residues, vinyl aromatic monomers such as styrene, tert-butyl styrene, tert-octyl styrene, and vinyltoluene, and hydrocarbon monomers such as isoprene and butadiene. Herein oil-soluble monomer means that the monomer will be miscible with heptane in a concentration of at least 25% by weight at 20 °C. Suitably they are miscible with heptane in a concentration of at least 75% by weight at 20 °C. In an embodiment the oil-soluble monomer is miscible with heptane in all concentrations at weight at 20 °C.

Suitably the amount of bicyclic (meth)acrylate esters, or if not used the amount of oil-soluble monomers, or if both are used the total amount of bicyclic (meth)acrylate esters and oil-soluble monomers is 5 percent by weight (%w/w) or more of the total amount of monomers comprised in the dispersing polymer. In an embodiment, the total amount of bicyclic (meth)acrylate esters and oil-soluble monomers is 10, 20, 40, 50, 55, 60, 65, 70, 75, 80, 85, 90, or 95 %w/w or more.

In an embodiment the dispersing polymer was produced by polymerizing a mixture of monomers that included vinyl silicones and vinyl benzyl ethers of the formula 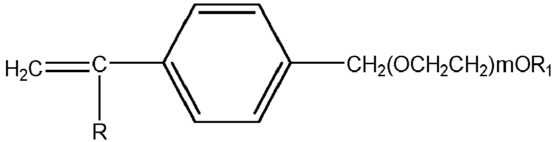 , wherein R is hydrogen or methyl, m=5-100, and R1 is an alkyl, alkaryl, or aralkyl group with 10-22 carbon atoms. The use of such monomers can allow a more constant thickening effect with varying temperatures in the application. In an embodiment these vinyl silicones and vinyl benzyl ethers make up from 0.01 to 25, 20, 15, 10, or 5 percent by weight (%w/w) of the total amount of monomers comprised in the dispersing polymer.

Other monomers than the ones mentioned above can be uses in any embodiment when making the dispersing polymer. These can be monomers that are (meth)acrylic, vinyl, or vinylidene based. In principle any other monomer containing the grouping CH2=C< can be used. These include C1-9 alkyl or hydroxyalkyl esters of (meth)acrylic acid, such as ethyl acrylate, butyl acrylate, 2-ethylhexyl acrylate, methyl methacrylate, butyl methacrylate, benzyl methacrylate, 2-hydroxyethyl acrylate, 2-hydroxyethyl methacrylate, and 2-hydroxypropyl methacrylate, as well as acrylic acid and methacrylic acid themselves, other derivatives of those acids such as acrylonitrile, methacrylonitrile, acrylamide and methacrylamide, vinyl esters of organic and inorganic acids such as vinyl acetate, vinyl propionate, vinyl chloride and vinylidene chloride. Since the solubility of polymers based on C1-4-alkyl (meth)acrylates in oils is not good, in an embodiment the amount of such lower alkyl (meth) acrylates is kept low, suitably an amount of 0.01 to 25, 20, 15, 10, or 5 percent by weight (%w/w) of the total amount of monomers comprised in the dispersing polymer is used.
In another embodiment the use of higher alkyl (meth)acrylates in the dispersing polymer is preferred.

Albeit that the molecular weight of the dispersant polymer has an influence on how effectively it thickens, the dispersing polymer can have a molecular weight within a wide range. Typically the thickening power becomes higher as the molecular weight increases. Suitably the weight averaged molecular weight is at least 7000 D. In an embodiment the molecular weight is 10, 20, 50, 100. or 200 kD or more. For practical purposes the maximum weight averaged molecular weight is suitably 20.000.000 D. The polydispersity of the polymer is typically in the range of 1.5-10. For polymers with a higher polydispersity the molecular weight is suitably towards the higher end of the range.

The average radius of gyration, or hydrodynamic volume, of the dispersing polymer (without attachment to a core), as determined by dynamic and static light scattering in n-heptane, is suitably 20-200 nm. In an embodiment the radius of gyration of the polymer is 25-150 nm.

### Core

The core can be any polymer that is swellable but not dissolving in the apolar medium and which allows the dispersing polymer to be chemically, preferably covalently, bonded thereto. Any of the monomers mentioned for use in the dispersing polymer production, but not limited thereto, can be used when making a core polymer. In an embodiment the core polymer does not comprise acid and base monomers. In an embodiment the core is a cross-linked polymeric material. For guidance, it can be stated that crosslinking monomers used to make such a cross-linked polymer, include allyl methacrylate, trimethylolpropane triacrylate (Sartomer® SR 351), diallyl phthalate, the aromatic diacrylate of bisphenol A (Photomer® 4028), ethylene glycol dimethacrylate and analogs thereof like hexanediol dimethacrylate, and divinylbenzene. Suitably such crosslinking monomers are used in an amount of 0.2 to 2 %w/w, based on the weight of all monomers. For a core polymer with a higher molecular weight, usually less crosslinking monomer is used and vice versa. For core polymers that contain lyophilic monomers the amount of crosslinking monomer is suitably increased to prevent the core polymer from becoming soluble.

Monomers that are suitably used for making core polymers are monomers that show little or no solubility in heptane, such as C1-3 alkyl (meth)acrylates like methyl, ethyl, and propyl (meth)acrylates. They are suitably used in combination with comonomers that are more polar, like (meth)acrylic acid, or less polar, like butyl meth(acrylate) and styrene. Suitably the monomers for forming the core polymer consists for 50 %w/w or more of C1-3 alkyl (meth)acrylates.

In another embodiment the invention relates to a process to make NADCs. More specifically, the core can be pre-formed, meaning that first a core polymer is produced, which is subsequently reacted such that a dispersing polymer becomes attached to it. This reaction can be thru any reactive group on the core polymer. The dispersion polymer may also be grafted onto the core. Suitably this grafting process is a conventional process in which in a first step a hydrogen atom is abstracted from the core polymer. In an embodiment the grafting process is achieved thru a radical polymerization of monomers in the presence of the core polymer. In yet another process, hydrogen atoms are abstracted from both a core and a dispersion polymer. This is suitably done in an extruder.
Alternatively, the dispersing polymer is formed first after which parts of the dispersing polymer is reacted with further reactants to form a core polymer. This process can be a radical polymerization process using monomers as mentioned above, or it can be a condensation process, such as by condensing acid groups with polyols or reacting basic groups with polyacids, or an addition process, for instance reacting an isocyanate with part of the basic functions of the dispersing polymer. Such reactions of the dispersing polymer to form the NADC is suitably performed using an aqueous medium wherein the reactants are dispersed.

The average particle size of the core polymer, as measured in heptane using a Malvern multisizer, is 500 nm, 400, 300, 200, 100, or 50 nm or less. Suitably the particle size is 1, 2, 5, or 10 nm or more.

The weight ratio of core and dispersing polymer in the NADCs can be varied within a wide range. Suitably the ratio of core and dispersing polymer ranges from 1:99 to 99:1 %w/w. In an embodiment the weight ratio between core and dispersing polymer is more than 5:95, more than 10:90, more than 15:85, more than 20:80, or more than 25:75. In an embodiment the weight ratio between core and dispersing polymer is less than 90:10, less than 70:30, less than 50:50, less than 40:60, or less than 30:70. In an embodiment the core and dispersing polymer is present in a weight ratio between 10:90 and 30:70.

### Medium

The NADCs of the invention can be used to thicken a variety of apolar media. Suitably the medium is an apolar media such as aliphatic, or predominantly aliphatic, hydrocarbons such as hexane, heptane and petroleum fractions of various boiling point ranges. The latter may be less desirable since they typically have some content of aromatic material, leading to odour and/or toxicity considerations. The apolar liquid may if desired include minor proportions of polar solvents, such as ethanol, isopropanol or tert-butanol. In this respect a minor portion is considered to be less than 15 % by weight. In an embodiment the polar solvent is present in an amount of less than 10, 5, 3, 2, or 1 %weight.

In another use, the dispersion is used to thicken an oil that is suitably chosen from mineral oils, synthetic oils, animal and plant oils, and mixtures thereof. In particular it is possible to use, singly or as mixtures, oils such as paraffinic mineral oils, polyolefins oils, polyoxyalkylene glycol oils, such as polyethylene glycol or polypropylene glycol, oils of esters such as di-2-ethylhexyl sebacate or di-2-ethylhexyl adipate, oils of polyol esters such as trimethylolpropane esters or pentaerythritol esters, oils of perfluoroalkyl ethers, silicone oils and oils of polyphenyl ethers.
Polyolefin oils include polymers of various olefins or hydrides thereof, including poly-α-olefin oils. Any olefin may be used, and as examples mention may be made of ethylene, propylene, butene and α-olefins with five or more carbons. In the manufacture of polyolefins, olefins may be used singly or two or more kinds may be used in combination.
Also oils derived from a Fischer-Tropsch synthesis, so called GTL (gas to liquid) oils can be used, particularly since they have a very low sulphur and aromatic content and a very high paraffin constituent ratio when compared with mineral oils refined from crude oil.
Typical examples of animal and plant oils that can be thickened by using a NADC of the invention are triglycerides, which can be unsaturated, partially hardened, or fully hardened. In an embodiment the animal and/or plant oil is selected from tallow, tall oil, palm oil, palm kernel oil, coconut oil, sunflower oil, olive oil, canola oil, castor oil and rapeseed oil. Any of these oils may be used alone or in mixtures.

### Process

Any conventional polymerization process can be used to form the NADCs of the invention, see above for some particular elements. Suitable the polymerization of the NADC is conducted in the presence of a medium with which the dispersing polymer is compatible (i.e. the polymer is soluble in said medium). Media that may be used include solvents containing 50 or more % by weight of one or more C7-C22 hydrocarbon, such as heptane, octane, nonane, decane, undecane, dodecane, tridecane, tetradecane, pentadecane, hexadecane, heptadecane, octadecane, and any of their isomers, such as tri isododecane. However, the medium suitably comprises other apolar solvents such as liquid propane, butane, pentane, hexane, but also toluene, xylene and oils may be used.

In view of potential environmental concerns, it is preferred not to use aromatic solvents in the medium. Also, in view of purification steps that may be needed to obtain the NADC, it can be beneficial not to use media which is difficult to separate from the NADC. Accordingly, in one embodiment the media is chosen so that it can be removed from the NADC by volatilization, i.e. evaporation, of the medium. This can be at lowered pressures and/or higher temperatures if desired. In an embodiment the media has a boiling point or boiling point range within the range of from -5 to 150 °C at 1 bara.

In another embodiment the lowest boiling point of the medium coincides with the polymerization temperature during the polymerization step. This allows the polymerization to be performed under reflux conditions, ensuring a good temperature control.
Suitably the medium, when removed from the product, is recycled to the polymerization step. Optionally the recycle stream is purified before being used as a polymerization medium again. In an embodiment the medium comprises heptane.
However, depending on the dispersing polymer to be made, it may be desired to use an aqueous process, such as an emulsion or suspension polymerization. It is noted that if making the dispersing polymer involves reactions with one or more isocyanates, it is preferred to use an organic medium and not an aqueous medium.

If an NADC is produced, the dispersing polymer is suitably made by polymerization of the monomers in the presence of the core polymer. In the polymerization, all monomers of the dispersing polymer can be added at once or they can be, wholly or partly, added consecutively, in any order and in any combination.
Alternatively, the dispersing polymer is produced first, and then modified with an agent that will allow later reaction with monomers that make up the core. In any of these processes all the polymerization initiator, or constituents making up the initiating species, can be added at once or they can, wholly or partly, be added consecutively, in any order and in any combination. The initiating species can be conventional organic peroxides, redox-type initiators, and/or reagents allowing a living-type free radical polymerization. For ease of processing, conventional polymerization techniques are used, such as batch and semi-batch processes. Suitably all monomer is added at once and part of the initiating species, or one of its constituents, is added over time during the course of the polymerization.

Suitably an NADC of the invention is formed by copolymerizing the lyophilic monomer of the formula 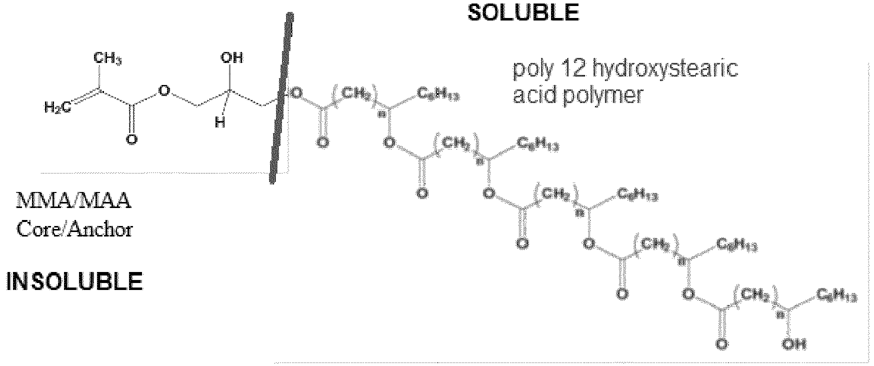 together with additional monomers to form a swellable core polymer that constitutes mainly of the other monomers which is stabilized by the hydroxystearic function, which is subsequently reacted with molecules providing acid and base functionality, e.g. by reaction with specific epoxides or isocyanates, or by radical reactions with the monomers as presented above.

It is noted that any one of the embodiments mentioned herein can be combined with any other embodiment mentioned herein. When a ratio or amount is given is by weight, unless mentioned differently.

The present invention will now be illustrated by the following non-limiting examples.

### Examples

A representative preparation for a dispersing polymer is given below. It is related to the methods given in the book "Dispersion polymerization in organic media" (edited by K.E.J. Barrett, John Wiley & Sons, 1975), pp 106- 114 for the dispersant polymer and functionalization, and pp 234-241 for the formation of the dispersing polymer. The following acronyms are used:
- LMA: lauryl methacrylate
- SMA: stearyl methacrylate
- iBXMA: isobornyl methacrylate
- MAA: methacrylic acid
- BA: butyl acrylate
- DMAPMA: dimethylaminopropyl methacrylamide
- DMAEMA: dimethylaminopropyl methacrylate
- HPMA: hydroxypropyl methacrylate
- DiMeAm: dimethylacrylamide
- HDDMA: 1,6- hexanediol dimethacrylate
- AA: acrylic acid
- BMA: butyl methacrylate
- MMA: methyl methacrylate
- St: styrene

Shell 500n (Daesan) base oil was used.

### Preparation of dispersing polymer (NAD)

A 3-I, 4-neck round bottom flask is equipped with a stainless steel stirrer, thermometer, a condenser, a heating media, a slow add funnel and a syringe pump. After assembly, 158 g of heptane is added followed by 350 g of a mixture of monomer as mentioned in the table. The addition vessels are rinsed/flushed with 11 g of heptane. The mixture is brought to reflux and after 5 minutes 60% of a mixture of 2.3 g of Trigonox® 125 - C25 (t-amyl peroxypivalate) and 210 g of heptane is added over a period of 15 minutes. The mixture is held at reflux for 1 h then the remaining 40% of the initiator is added over 4 h. Then 447 g of heptane was added and 5 minutes after reflux started again, a mixture of 0.5 g of Trigonox® 125 - C25 and 20g of heptane was added over 4 hours followed by a one hour reaction time.

### Functionalization of the dispersing polymer

To 1030 g of the stabilizer polymer solution are added 1.5 g of Arquad® HC (di(hydrogenated tallow)dimethylammonium chloride), glycidyl methacrylate (GMA) in an amount as specified, for example 1 the amount would be 1.68 g, and 15 g of heptane. The addition devices are rinsed/flushed with 0.18 g of 2-(t-butyl)-4,6-dimethyl phenol in 15 g of heptane. The mixture is held at reflux for 8 hours after which up to 440 g of heptane was added, dependent on the desired viscosity.

### Preparation of NADC

To 1490 g of the functionalized NAD solution, a mixture of 94 g of heptane,10% of a solution of a core mixture comprising 45 g of a core monomer mixture of methyl methacrylate and/or further (co)monomer as indicated (in example 1 a mixture of MMA and AA in a weight ratio of 75/25), and the indicated amount of hexanediol dimethacrylate xl agent (for example 1 the amount would be 0.25 g, is added over 20 minutes. The mixture is held at reflux. At the start of dosing this core mixture, also the dosing started of an initiator mixture of 1.44 g of Trigonox® 125 - C25 in 102 g of heptane. The initiator mixture was added over a 5 hour period. After 40 minutes of the start of the addition of the initiator, the remaining 90% of the core mixture is added over a 3 h period.

### Oil exchange

The NADCs of the above procedures are exchanged into oil solutions using a rotatory evaporator. The desired oil is added to the solution in heptane in a calculated amount so the final active level of the NADC in the oil is 15.0%w/w after distilling off the heptane.

### Viscosity measurements

The measurements are conducted with a Brookfield RV viscometer with a Heliopath accessory at room temperature using a spindle type C, on clear, i.e. compatible, 15% solutions or dispersions of dispersing polymers and NADCs in oil. If the viscosity is too high to be accurately measured with a spindle C, than a spindle D can be used.

| | Monomers used to make the dispersing polymer (mole%) | | | | | | | Functionalization agent | Core polymer | | | | |
|---|---|---|---|---|---|---|---|---|---|---|---|---|---|
| example # | iBXMA | SMA | LMA | Acid monomer MAA | BA | basic monomer (DMA PMA) | Other monomer | GMA (mole % on dispersing polymer | HDDM A XI agent, mol % on core monomers | comonomer | comonomer, wt % | Shell 500n (Daesan) | |
| CEA | 47 | 10,7 | 17,2 | 7,7 | 7,5 | 0 | HPMA 5 | 0,053 | 0,5 | BMA | 25 | Precipitate | n.r. |
| | | | | | | | DiMeAm 5 | | | | | | |
| CE B | 47 | 10,7 | 17,2 | 7,7 | 7,5 | 0 | HPMA 5 | 0,139 | 1,5 | BMA | 25 | Precipitate | n.r. |
| | | | | | | | DiMeAm 5 | | | | | | |
| CE C | 27 | 10,2 | 16,8 | 7,7 | 7,5 | 3,8 | St 27 | 0,157 | 0,25 | BMA | 25 | not compatible | n.r. |
| CE-D | 47 | 13,7 | 20,3 | 7,7 | 7,5 | 3,8 | | 0,190 | 0,5 | AA | 25 | not compatible | n.r. |
| CE-E | 47 | 13,7 | 20,3 | 7,7 | 7,5 | 3,8 | | 0,192 | 0,5 | BMA | 25 | not compatible | n.r. |
| CE-F | 47 | 12,7 | 19,3 | 7,7 | 7,5 | 3.9 DMAE MA | | 0,150 | 0,5 | AA | 25 | not compatible | n.r. |
| CE-G | 58,3 | 8,1 | 14,7 | 7,7 | 7,5 | 3,8 | | 0,070 | 0,5 | AA | 25 | not compatible | n.r. |
| CE-H | 58,3 | 8,1 | 14,7 | 7,7 | 7,5 | 3,8 | | 0,049 | 0 | BMA | 25 | not compatible | n.r. |
| 1 | 0 | 34,15 | 40,7 | 7,7 | 7,5 | 0 | HPMA 5 | 0,840 | 0,2 | AA | 25 | good | 4 |
| | | | | | | | DiMeAm 5 | | | | | | |
| 2 | 0 | 37,9 | 45,3 | 8 | 7,8 | 0 | St 1 | 0,330 | 0,2 | AA | 25 | good | 27 |
| 3 | 47 | 13,7 | 20,3 | 7,7 | 7,5 | 3,8 | 0 | 0,220 | 0 | BMA | 100 | good | 176 |
| 4 | 47 | 13,7 | 20,3 | 7,7 | 7,5 | 3,8 | 0 | 0,220 | 0,2 | BMA | 75 | good | 61 |
| | 0 | 40,6 | 51,4 | 8,0 | 0 | 0 | 0 | 2,40 | 0,89 | BMA | 100 | good | n.d. |
| | 0 | 40,6 | 51,4 | 8,0 | 0 | 0 | 0 | 0,40 | 0,80 | BMA | 25 | good | n.d. |
| | 0 | 40,6 | 51,4 | 8,0 | 0 | 0 | 0 | 0,84 | 0,20 | BMA | 75 | good | n.d. |
| | 0 | 32,2 | 40,7 | 7,7 | 7,5 | 0 | 0 | 0,84 | 0,20 | AA | 25 | good | n.d. |
| | 0 | 37,2 | 43,8 | 7,7 | 7,5 | 3,8 | HPMA 5 | 0,89 | 0,20 | AA | 25 | good | n.d. |
| | | | | | | | DiMeAm 5 | | | | | | |
| | 47 | 13,7 | 20,3 | 7,7 | 7,5 | 3,8 | 0 | 0,21 | 0,00 | AA | 25 | good | n.d. |

| | | | | | | | | | | | | | |
|---|---|---|---|---|---|---|---|---|---|---|---|---|---|
| n.r. = not relevant, n.d. = not determined | | | | | | | | | | | | | |

While the NADCs show compatibility and low viscosity in heptane, the medium of preparation, their behavior in different oils varies greatly (Table 1).

NADCs based on long chain alkyl methacrylates, LMA and SMA combined with an acidic monomer, even when used with a monomer with hydroxyl or amide functions (CE A -D) showed reasonable to good compatibilities in the types of oils that were tested, but exhibited too little viscosifying or thickening power. With 27 mol % iBXMA, along with 27 mol % St, and including a basic monomer of the invention, the polymer of example 1 showed better properties.
Example 3, when compared to Example 1, shows that increasing the amount of iBXMA improved the thickening effect of the NADC. This was confirmed in Example 6. Also in Examples 2-4 the improved properties were observed, but it was realized that the basic monomer that is used influences performance to a certain extent. Examples 5 shows that the amount of crosslinker in the core of the NADC can have an influence on the dispersibility of the NADC, but example 6 shows this can be compensated by adapting the dispersing polymer part. Hence some routine optimization may be needed for a specific core material, by varying the monomer levels of the dispersing polymer.

Thus, it is found that the incorporation of a relatively small amount of both acidic and basic monomers in combination with one or more lyophilic monomers and optional further monomers in the dispersing polymer (or the dispersing polymer part of an NADC) allows for obtaining a great thickening efficacy of apolar media.

## Claims

1. Non-aqueous dispersant composite (NADC) comprising a core of a polymer that is swellable and not soluble in base oil 500n (Daesan) and a dispersing polymer that is soluble in said oil and is covalently bonded to said core.

2. NADC of claim 1 wherein the dispersing polymer comprises lyofilic, base, and acid groups.

3. NADC of claim 2 wherein one or more of the lyofilic groups of the dispersing polymer are oleophobic groups.

4. NADC of claim 2 or 3 wherein the one or more acid groups of the dispersing polymer are derived from one or more monomers selected from unsaturated carboxylic acids, unsaturated sulfonic acids, unsaturated phosphoric acids, and unsaturated boric acids.

5. NADC of any one of claims 2-4 wherein the one or more base functions of the polymer are obtained from one or more monomers with basic hydroxyl or amine functions, preferably selected from the group consisting of monomers with primary, secondary, or tertiary amine groups.

6. NADC of any one of claims 2-5 wherein the one or more lyophilic functions of the polymer are obtained from one or more monomers selected from the group consisting of bicyclic (meth)acrylate esters, linear or branched, substituted or unsubstituted, C10-22-alkyl (meth)acrylates, including monomers having one or more 12-hydroxystearic acid residues, vinyl aromatic monomers and hydrocarbon monomers.

7. NADC of any one of claims 2-6 wherein the ratio of acid and basic groups ranges from 0.1:99.9 to 99:1 mole%.

8. NADC of any one of claims 2-7 wherein the amount of acid and basic groups per dispersing polymer molecule, independently, ranges from 1 to 1000.

9. NADC of any one of claims 1-8 wherein the dispersing polymer has a weight averaged molecular weight of at least 7000 D.

10. NADC of any one of the previous claims wherein the dispersing polymer comprises en amount of bicyclic (meth)acrylate esters, linear or branched, substituted or unsubstituted, C10-22-alkyl (meth)acrylates, including monomers having one or more 12-hydroxystearic acid residues, vinyl aromatic monomers and hydrocarbon monomers in the monomer mixture to make the polymer is 5% by weight or more.

11. NADC of any one of the previous claims wherein the weight ratio of the dispersing polymer to the core polymer is from 1:99 to 99:1.

12. Process to make a NADC of any of the preceding claims by functionalizing a dispersing polymer that is obtainable by radical polymerization of one or more unsaturated monomers, preferably with lyophilic, base, and/or acid groups, in a solvent containing 50 or more % by weight of one or more C7-C22 hydrocarbons, with an ethylenically unsaturated group and subsequently reacting the functionalized polymer with further monomers to form the core polymer by means of a radical polymerization, in a solvent containing 50 or more % by weight of one or more C7-C22 hydrocarbons.

13. Method of thickening an apolar medium by mixing a NADC of any one of claims 1-11 with said medium.

14. Thickened apolar medium obtainable by the process of the previous claim.
